# FASCICULE DE BREVET EUROPEEN

(11) **EP 3 980 250 B1**
(45) Date de publication et mention de la délivrance du brevet: **06.08.2025**
(21) Numéro de dépôt: 20742324.5
(22) Date de dépôt: 08.06.2020
(51) Int. Cl.: B29C 65/08, B29C 65/48, B29C 65/78

(54) **PROCÉDÉ ET MACHINE DE SCELLAGE**
ABDICHTUNGSVERFAHREN UND -MASCHINE
SEALING METHOD AND MACHINE

(30) Priorité: 10.06.2019 FR 1906151; 10.06.2019 US 201962859371 P
(43) Date de publication de la demande: 13.04.2022
(73) Titulaire: Selenium Medical, 17000 La Rochelle (FR)
(72) Inventeur: RICHART, Olivier, 17580 Le Bois Plage En Re (FR)
(74) Mandataire: Ipsilon
(86) Numéro de dépôt international: PCT/FR2020/050971
(87) Numéro de publication internationale: WO 2020/249892

(56) Documents cités:
- WO-A1-2013/057774
- US-A- 4 328 061
- US-B2- 10 647 063
- US-B2- 6 786 989

## Description

### DOMAINE DE L'INVENTION

La présente invention concerne de manière générale le scellage d'une partie d'un objet, telle qu'une partie d'un emballage. L'invention concerne plus particulièrement un procédé et une machine de scellage.

### ART ANTERIEUR

On connaît de la demande déposée sous le numéro PCT/FR2017/052853, et publiée sous le numéro WO2018078242A1, un emballage comprenant une coque inférieure et une coque supérieure. La coque supérieure comprend un capot et une partie de liaison qui se présente sous la forme d'un corps traversant et qui est reliée au capot par une charnière.

Le bord libre du capot et le bord libre supérieur du corps traversant délimitent entre eux une fente périphérique qui s'étend d'une extrémité de la charnière à l'extrémité opposée de la charnière. Il est prévu d'appliquer une bande de scellage qui relie les bords du capot et de la partie de liaison qui se font face sur toute la longueur desdits bords de manière à recouvrir ladite fente.

La partie de liaison est munie d'un élément de rigidification qui permet à la bande de scellage d'être appliquée sur la fente, sans risque de déformation de la fente grâce à la rigidité conférée à la coque supérieure par l'élément de rigidification.

Une telle conception de la coque supérieure de l'emballage permet ainsi d'appliquer la bande sans risque de déformation de la fente, mais il convient aussi que le procédé même selon lequel la bande de scellage est appliquée soit fiable. En effet, il peut exister un risque de mauvaise application de la bande de scellage sur l'objet notamment si la bande est appliquée avec des différences d'adhérence à certains endroits. Il est ainsi souhaitable de développer un procédé et une machine correspondante qui permet d'appliquer de manière fiable la bande de scellage pour obtenir l'étanchéité souhaitée.

Le document US4328061 A décrit un appareil comprenant une roue pour l'application d'une bande adhésive sur un matériau. La roue peut inclure une source à ultrasons pour l'activation de la bande.

Le document WO2013057774 A1 décrit un dispositif de collage de ruban thermo-enduit de type à air chaud.

Le document US6786989 B2 décrit un procédé de scellement d'une surface d'un corps, dans lequel un matériau mince est appliqué sur la surface et fixé à la surface par fusion suite à une excitation mécanique.

Le document US10647063 B2 décrit un procédé pour sceller les bords de composants en matière plastique renforcée par des fibres de carbone, comprenant l'application d'un produit thermoplastique semi-fini sur un bord coupé de composant en composite de fibres qui est un composant en matière plastique renforcée par des fibres de carbone, et l'assemblage par soudage par ultrasons du produit thermoplastique semi-fini au bord coupé du composant en composite de fibres.

La présente invention a pour but de proposer un nouveau procédé et une nouvelle machine permettant de pallier tout ou partie des problèmes exposés ci-dessus.

### RESUME DE L'INVENTION

A cet effet, l'invention a pour objet un procédé de scellage selon la revendication 1.

La bande de scellage peut ainsi être appliquée de manière fiable au niveau de la zone d'ouverture dudit emballage, avec une homogénéité d'adhérence entre la bande et l'objet qui permet de bénéficier d'une bonne étanchéité au niveau de la zone sur laquelle la bande de scellage est appliquée.

Le procédé peut aussi comporter une ou plusieurs des caractéristiques suivantes prises dans toute combinaison techniquement admissible.

Selon une caractéristique avantageuse de l'invention, le déplacement de l'objet comprend un mouvement de rotation de l'objet autour d'un axe de rotation.

Selon une caractéristique avantageuse de l'invention, le déplacement de l'objet comprend un déplacement de l'objet selon une direction transversale à la direction de l'axe de rotation.

Selon une caractéristique avantageuse de l'invention, le déplacement de l'objet comprend un déplacement de l'objet selon une direction parallèle à la direction de l'axe de rotation.

Selon une caractéristique avantageuse de l'invention, des ultrasons sont transmis par la sonotrode à la partie de la bande de scellage qui se présente entre l'objet et la sonotrode de sorte que ladite partie de la bande de scellage soumise aux ultrasons est collée sur l'objet, et le déplacement de l'objet entraine le défilement de la bande de scellage entre la sonotrode et l'objet.

Selon une caractéristique avantageuse de l'invention, l'effort d'appui de la sonotrode sur l'objet est mesuré à l'aide d'un capteur, tel qu'une jauge d'effort, et l'objet est déplacé en fonction de l'effort d'appui mesuré.

Selon une caractéristique avantageuse de l'invention, la direction du segment de ligne défini par la zone d'application linéique de la sonotrode est parallèle à la direction de rotation de l'objet.

Selon une caractéristique avantageuse de l'invention, la bande de scellage comprend une face munie de colle qui devient active lorsqu'elle soumise aux ultrasons de la sonotrode.

Selon une caractéristique avantageuse de l'invention, l'objet est déplacé au moins jusqu'à ce que la bande de scellage revienne sur elle-même en étant collée par la sonotrode sur une partie de la bande de scellage déjà collée sur l'objet.

Selon une caractéristique avantageuse de l'invention, le procédé comprend une étape de coupe de la bande de scellage après recouvrement par la bande de scellage de la zone à sceller de l'objet.

L'invention concerne également une machine pour le scellage d'une zone selon la revendication 11.

Selon un aspect particulier, le système de déplacement motorisé est piloté de manière à maintenir l'objet en appui, par l'intermédiaire de la bande de scellage, contre la zone d'application de la sonotrode.

Selon une caractéristique avantageuse de l'invention, la machine comprend un capteur d'effort agencé pour mesurer l'effort d'appui entre l'objet et la sonotrode, et l'unité de pilotage est configurée pour piloter le déplacement de l'objet en fonction de l'effort d'appui mesuré.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la figure 1 est une vue en perspective conformément à un mode de réalisation de l'invention, d'une coque supérieure d'un emballage présentant une zone fendue à sceller à l'aide d'une bande de scellage et d'un support destiné à recevoir ladite coque pour permettre de la tenir lors de l'opération de scellage ;
- [Fig. 2] la figure 2 est une vue en perspective conformément à un mode de réalisation de l'invention, de la coque et du support de la figure 1 à l'état tenu de la coque par ledit support, et d'une bande de scellage dont une partie est destinée à être appliquée sur la zone fendue de la coque ;
- [Fig. 3] la figure 3 est une vue en perspective conformément à un mode de réalisation de l'invention, de la coque, du support et de la bande de scellage de la figure 2 à l'état amené d'une partie de la bande de scellage sous la coque en vue de l'application de ladite partie de bande de scellage sur la zone fendue à sceller, la sonotrode n'étant pas représentée ;
- [Fig. 4] la figure 4 est une vue en perspective conformément à un mode de réalisation de l'invention, montrant la partie de la bande de scellage positionnée entre la sonotrode et la coque, en vue de démarrer le scellage par pré-collage de la bande de scellage en une position de la coque correspondant à une partie située entre les extrémités de la fente, qui forme une charnière ;
- [Fig. 5] la figure 5 est une vue en perspective conformément à un mode de réalisation de l'invention, de la coque sur son support, en cours de rotation sur elle-même, tandis que la bande de scellage défile et s'enroule, par le mouvement de déplacement de la coque, sur la coque en étant collée sur la zone fendue de la coque à l'aide de la sonotrode ;
- [Fig. 6] la figure 6 est une vue en perspective conformément à un mode de réalisation de l'invention, de la coque maintenue sur son support, à la fin de l'opération d'application de la bande de scellage sur la coque, la bande de scellage étant revenue sur la zone initiale de scellage ;
- [Fig. 7] la figure 7 est un schéma de blocs présentant différentes étapes d'un procédé de scellage selon un mode de réalisation de l'invention ;
- [Fig. 8] la figure 8 est une vue schématique d'une bande de scellage, la partie de droite non encore sollicitée par la sonotrode étant représentée différemment de la partie de gauche de la bande qui a été sollicitée par la sonotrode et qui adhère ainsi à l'objet (non représenté) ;
- [Fig. 9] la figure 9 est une vue en perspective d'une coque supérieure d'un emballage, telle que la coque de la figure 1, ladite coque supérieure présentant une fente d'ouverture pouvant être scellée par une bande de scellage selon un procédé de scellage conforme à un mode de réalisation de l'invention ;

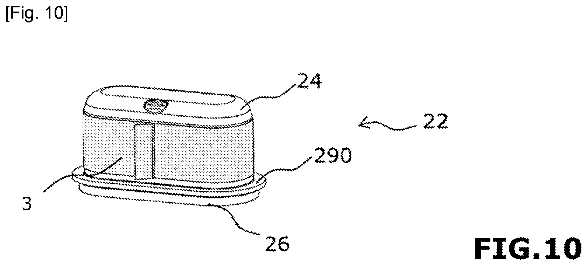

- [Fig. 10] la figure 10 est une vue en perspective de la coque supérieure de la figure 9 à l'état appliqué de la bande de scellage sur la fente d'ouverture ;
- [Fig. 11] la figure 11 est une vue en perspective d'une coque inférieure destinée à être soudée avec la coque supérieure illustrée en figure 10 pour former un emballage ;
- [Fig. 12] la figure 12 est une vue schématique d'une machine conforme à un mode de réalisation de l'invention.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

En référence aux figures, on a représenté une machine de scellage qui comprend un système de couplage d'objet en vue de pouvoir maintenir l'objet pendant une opération de scellage. Le système de couplage comprend un support 1 et un système de maintien permettant de maintenir l'objet sur le support 1 de scellage.

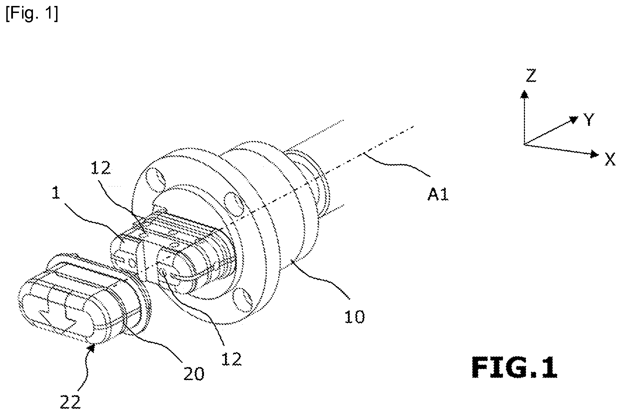

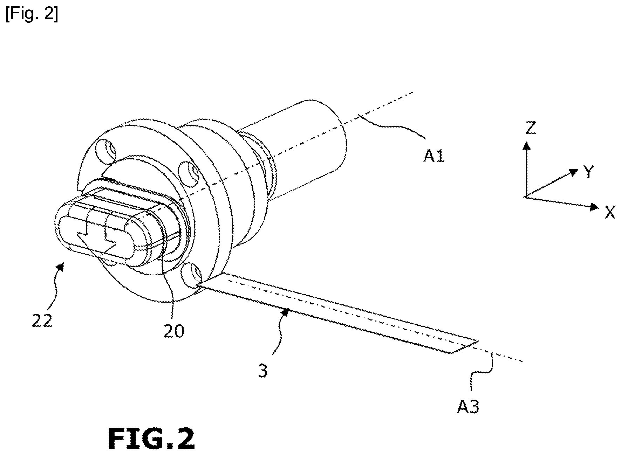

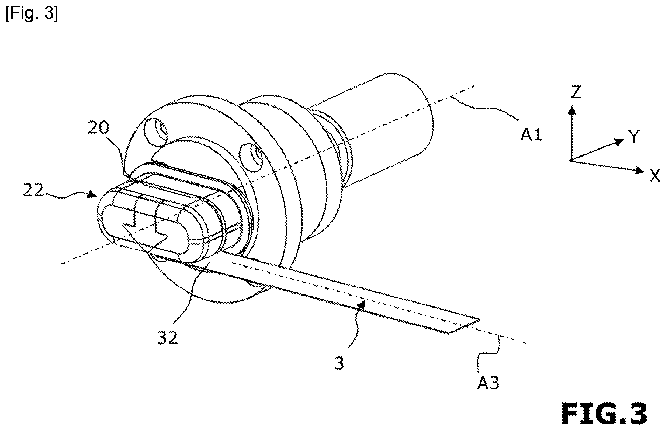

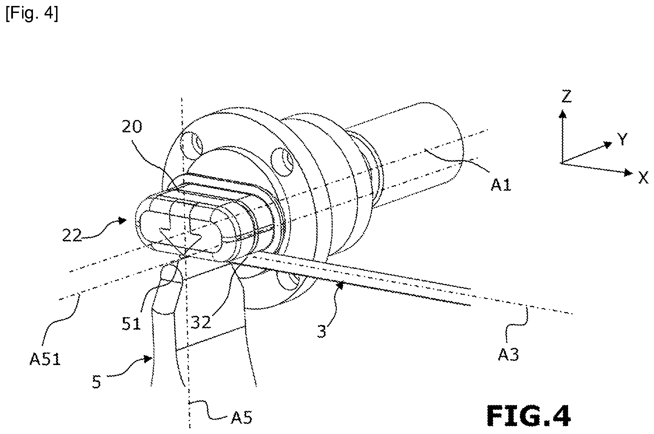

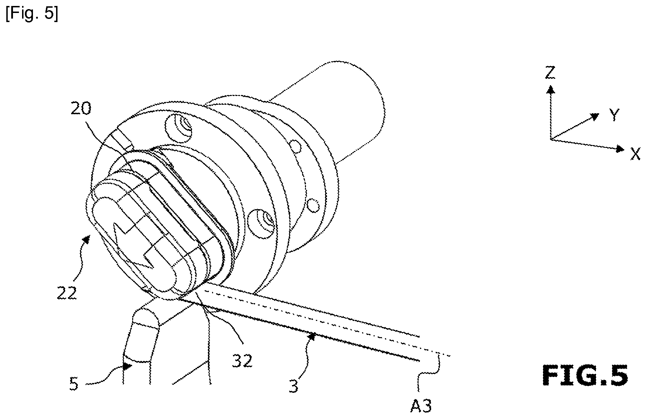

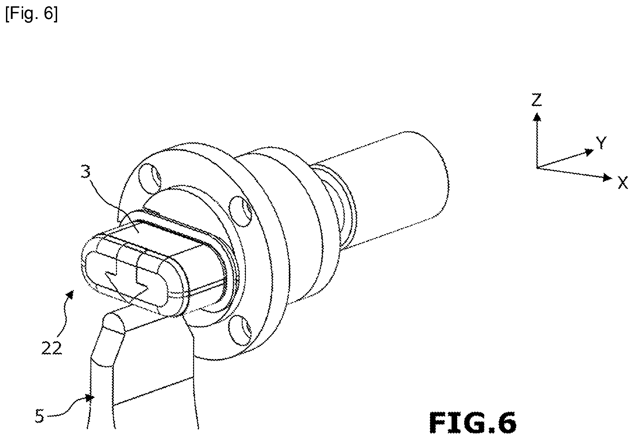

Dans l'exemple illustré aux figures, le support 1 de scellage est solidaire d'un dispositif 10, appelé mandrin, qui présente un axe de rotation A1, et qui est déplaçable par exemple par combinaison de chariots, selon des axes X et Z orthogonaux entre eux et à l'axe A1. L'axe Y du repère XYZ illustré sur les figures 1 à 6 correspond à l'axe A1. En variante, on peut prévoir que le support de scellage soit monté sur un robot multi-axes.

Le système de maintien peut être par exemple un système d'aspiration et des orifices d'aspiration 12 débouchant au niveau de la partie du support destinée à être engagée dans la partie creuse de l'objet. Ces moyens d'aspiration peuvent comprendre un dispositif de mise en dépression (ou vide) permettant, par l'intermédiaire de conduits, d'aspirer au niveau des orifices d'aspiration 12 ménagés dans le support 1 pour générer un effet de succion permettant de maintenir l'objet plaqué ou en appui contre le support.

Dans l'exemple illustré aux figures, le support 1 de scellage présente une forme mâle qui est engagée dans une partie creuse de l'objet sur lequel la bande de scellage est destinée à être appliquée.

Le support 1 de scellage est monté déplaçable à rotation autour d'un axe Y et déplaçable à translation dans un plan X, Z orthogonal à l'axe Y. En particulier, le support 1 est monté déplaçable selon une direction X et selon une direction Z orthogonale l'une par rapport à l'autre.

Dans l'exemple illustré aux figures, l'axe X est l'axe de défilement de la bande, de préférence un axe horizontal. L'axe Z est l'axe orthogonal au plan dans lequel défile la bande, de préférence l'axe vertical. L'axe Y correspond à l'axe autour duquel le support 1 est monté rotatif, de préférence un axe horizontal orthogonal à l'axe de défilement de la bande de scellage. L'axe longitudinal de la bande de scellage est noté A3.

Lorsqu'il est fait référence à une direction de déplacement selon une direction donnée, cela peut être dans un sens et/ou dans l'autre selon cette direction.

Afin d'obtenir ces mobilités de déplacement, la machine peut comprendre un système de déplacement du mandrin auquel est fixé le support, qui comporte un premier chariot motorisé (non représenté) monté coulissant selon l'axe X et un deuxième chariot motorisé (non représenté) monté coulissant selon l'axe Z. Il peut être prévu un troisième chariot motorisé monté coulissant selon l'axe Y. Ledit système de déplacement comporte aussi un moteur rotatif autour de l'axe A1 pour faire tourner le mandrin 10. Comme rappelé ci-dessus, on peut en variante prévoir que le système de déplacement soit réalisé sous la forme d'un robot multi-axes.

Dans l'exemple illustré aux figures, l'objet 22 présente une zone 20, telle qu'une fente d'ouverture, destinée à être recouverte par une bande de scellage 3 pour assurer l'étanchéité de l'objet au niveau de cette fente.

La machine comprend un système d'amenée qui permet d'amener la bande de scellage 3 entre une sonotrode 5 (présentée ci-après) et une zone de l'objet à sceller. Le système d'amenée peut comprendre un support de bande, qui se présente à la manière d'un dévidoir recevant la bande en rouleau, et un galet 4 rotatif. Le galet rotatif est un galet entrainé en rotation sur lui-même par un moteur. Le galet rotatif permet de faire avancer et dérouler la partie de la bande de scellage qui repose sur ledit galet.

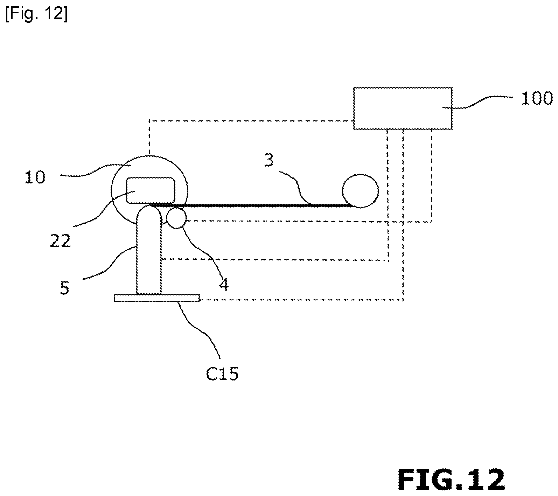

La rotation du galet 4 (illustré en figure 12) permet d'amener la bande de scellage 3 entre l'objet 22 et une sonotrode 5.

La sonotrode 5 comprend un générateur d'ultrasons et un corps qui est soumis à ces ultrasons pour restituer cette énergie vibratoire à la bande de scellage 3 à appliquer sur l'objet 22 afin d'exciter la colle de la bande de scellage 3 et la rendre adhésive pour permettre le collage de la bande de scellage 3 appliquée sur l'objet 22.

La sonotrode 5 présente en particulier une zone d'application 51 destinée à venir en contact avec la bande de scellage 3. La zone d'application 51 peut être située sur un embout de forme, en un matériau qui conduit les ultrasons, appliqué au corps principal de la sonotrode.

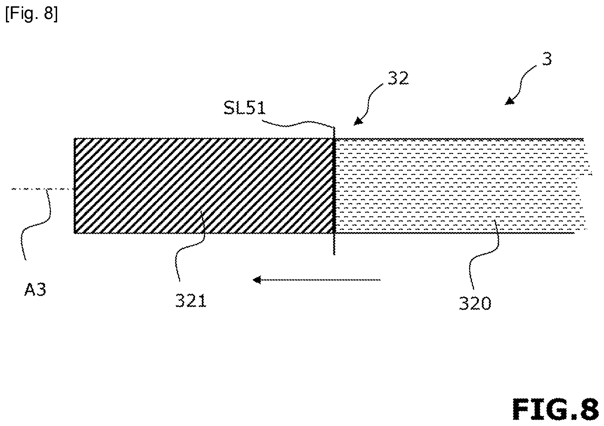

Comme illustré à la figure 8 pour une portion de la bande de scellage, la bande de scellage 3 comprend une face munie de colle 320 qui devient active (c'est-à-dire adhésive), lorsqu'elle est soumise aux ultrasons de la sonotrode 5. La zone hachurée 321, située en aval de la zone d'application de la sonotrode qui se présente sous la forme d'un segment de ligne SL51, illustre la partie de la bande dont la colle a été activée suite à son défilement en continu contre la zone d'application de la sonotrode. La face de la bande munie de colle est ainsi destinée à être positionnée en regard de la partie de l'objet à sceller.

Préférentiellement, la bande de scellage 3 est une bande pelable. Une fois la bande appliquée, celle-ci peut être retirée en tirant dessus pour la peler. On entend par pelable le fait que la bande ne se déchire pas lorsqu'on la retire, tandis que de la colle reste sur la zone de la coque précédemment scellée. Selon un mode de réalisation, ladite bande est par exemple en matériau synthétique non-tissé fabriquée à partir de fibres de polyéthylène, usuellement vendue sous la marque déposée TYVEK.

A l'état actif de la sonotrode, la zone d'application 51 de la sonotrode qui est en contact avec une zone correspondante de la bande de scellage, excite par ultrasons la colle qui est présente sur la bande de scellage 3 du côté de l'objet 22, de manière à faire fondre la colle (ce qui l'active) et à faire adhérer sur l'objet la zone de la bande de scellage ainsi excitée.

Selon le mode de réalisation illustré aux figures, ladite zone d'application 51 de la sonotrode 5 est linéique. Le terme "linéique" est utilisé par opposition à "surfacique". La portion d'extrémité de la sonotrode 5 présente par exemple un profil courbe, tel qu'une forme semi-circulaire, dont la génératrice sommet forme un segment de ligne qui correspond au segment SL51 de la sonotrode (voir figure 8) appliqué sur la bande de scellage lorsque la bande de scellage défile entre la sonotrode 5 et l'objet 22.

Dans l'exemple illustré aux figures, la direction A51 du segment de ligne défini par la zone d'application 51 linéique de la sonotrode, est sensiblement parallèle à l'axe A1 (direction Y) de rotation du support 1.

La machine comprend une unité de pilotage 100 qui permet de piloter les déplacements du support 1 (en particulier les déplacements des chariots) notamment dans le plan X, Z, et éventuellement selon l'axe Y, et de piloter la rotation du support 1 par l'intermédiaire du moteur auquel le support est couplé, et de piloter le système d'amenée de la bande de scellage, par exemple en pilotant la rotation du galet 4. On peut prévoir également que l'unité de pilotage 100 permette de commander l'alimentation électrique de la sonotrode 5 pour l'activer en début d'opération de scellage et la désactiver en fin de scellage. L'unité de pilotage 100 peut aussi piloter le fonctionnement d'un système de coupe (non représenté) de la bande de scellage en fin d'opération de scellage.

Lors de l'opération de scellage, l'unité de pilotage 100 est configurée pour commander le déplacement du support 1. L'unité de pilotage peut contrôler aussi la pression d'appui de la sonotrode 5 sur la partie de la bande de scellage 3 à appliquer sur l'objet 22 à l'aide d'un vérin (piloté par l'unité de pilotage) permettant un déplacement de la sonotrode selon l'axe Z.

Un capteur C15, illustré en figure 12, connecté à l'unité de pilotage 100, permet de déterminer l'effort d'appui entre le support 1 (ou l'objet 22) et la sonotrode 5 et de piloter le déplacement du support 1 et/ou de la sonotrode 5, en particulier selon l'axe Z, pour maintenir une valeur d'appui de consigne afin d'avoir un effort d'appui homogène au cours de l'opération de scellage afin d'obtenir de bonnes conditions d'application de la bande de scellage sur l'objet. Le capteur C15 peut être associé à la sonotrode 5 pour détecter l'effort d'appui exercé entre le support 1 et la sonotrode. Le capteur C15 peut être une jauge d'effort.

A l'état activé, la sonotrode 5 excite par ultrason la substance, ou colle, présente sur la bande de scellage, ce qui la fait fondre et entraine l'adhésion par collage de la partie ainsi excitée de la bande sur l'objet 22. Le déplacement du support, notamment la rotation du support 1 de l'objet, entraine alors le défilement de la bande de scellage entre la sonotrode 5 et l'objet 22. La partie 32 de bande de scellage 3 qui se présente entre l'objet 22 et une sonotrode 5 est ainsi appliquée de manière continue sur la zone à sceller de l'objet 22.

Selon un aspect particulier, une fois le collage initié sur une partie de la bande de scellage 3, la bande de scellage 3 est libérée à mesure que le support 1 est déplacé et tire sur la bande de scellage, par exemple du fait de l'enroulement de la bande de scellage sur le support.

L'unité de pilotage 100 permet de commander le déplacement en rotation du support 1, et donc de l'objet 22 porté par le support 1, en combinaison avec ou indépendamment du déplacement du support 1 selon la direction X ou Z, et éventuellement Y. L'unité de pilotage commande le déplacement en rotation autour de l'axe Y et/ou en translation dans le plan X, Z, et éventuellement selon Y, en fonction du profil géométrique de la zone à sceller. On comprend ainsi qu'au cours de l'étape de scellage, le déplacement du support 1 peut être un déplacement à translation pour appliquer la bande sur une portion rectiligne de la zone à sceller ou une rotation, éventuellement combinée avec un mouvement de translation, pour appliquer la bande sur une portion curviligne de l'objet. Comme rappelé ci-dessus le déplacement commandé peut aussi tenir compte de l'effort de consigne à appliquer au niveau de la zone de contact entre la sonotrode 5 et la bande de scellage 3.

On peut prévoir que l'unité de pilotage 100 comprend une interface utilisateur permettant de rentrer ou de sélectionner des données correspondant au profil (c'est-à-dire la forme géométrique) de la zone à sceller de l'objet, pour permettre à l'unité de pilotage 100 de piloter le système de déplacement du support 1 de manière à appliquer de manière continue et homogène la bande de scellage le long de la zone à sceller. Une mémoire permet de stocker ledit profil ou une liste de profils.

Selon un aspect particulier, l'unité de pilotage 100 est configurée pour, en même temps qu'elle commande la rotation du support et donc de l'objet sur lui-même, autour de l'axe Y, commander le déplacement de l'objet dans le plan X, Z, et éventuellement selon l'axe Y, afin d'amener de manière continue et régulière la partie de l'objet correspondant à la zone destinée à recevoir la bande de scellage, en contact du segment actif de la sonotrode par l'intermédiaire de la bande de scellage qui s'étend entre la sonotrode et l'objet.

Selon un mode de réalisation, on peut prévoir que l'unité de pilotage 100 soit configurée pour déplacer le support 1 de l'objet aussi selon l'axe Y. Initialement pour bien positionner la sonotrode en regard de la fente et/ou au cours de l'opération de scellage si la position de la zone à sceller varie selon l'axe Y au cours de la rotation du support, c'est-à-dire si la forme de la zone à sceller varie selon l'axe Y de sorte qu'une adaptation de la position de l'objet (et donc du support 1) est nécessaire au cours de l'opération de scellage en fonction de la partie de la zone à sceller de l'objet qui se présente en regard de la sonotrode.

Grâce au segment actif SL51 de la sonotrode 5 et à l'unité de pilotage 100 qui commande les déplacements du support, la bande de scellage 3 peut être appliquée de manière fiable et efficace sans risque d'irrégularité ou de variation d'adhérence au niveau des différentes zones de la bande de scellage appliquée sur l'objet.

En effet, le déplacement piloté du support combiné à l'utilisation d'une zone active de la sonotrode qui est linéique, permet que la bande de scellage défile en continu entre la sonde et l'objet.

Le contrôle de la vitesse de rotation du support 1 permet à la colle présente sur la face de la bande de scellage 3 opposée à celle en contact du segment actif SL51 de la sonotrode 5 d'être suffisamment excitée pour adhérer à l'objet, et la continuité de déplacement (par rotation et/ou translation du support) assure une adhésion homogène de la bande de scellage sur l'ensemble de la zone à sceller de l'objet. Avantageusement et comme expliqué ci-avant, la pression d'appui entre la sonotrode et le support est aussi contrôlée pour favoriser l'adhésion homogène de la bande de scellage à l'objet. Comme rappelé ci-dessus, on peut prévoir que la machine comprend un vérin permettant de pousser la sonotrode, de manière directe ou indirecte, contre la bande, avec une pression d'appui de valeur souhaitée. La pression d'appui est avantageusement régulée par l'unité de pilotage 100 pour être maintenue à une valeur de référence mémorisée, à l'aide du capteur 51 qui permet de mesurer la pression d'appui en cours.

Le segment actif SL51 de la sonotrode 5 est orienté selon une direction transversale, de préférence perpendiculaire, à la direction de déplacement A3 de la partie de la bande de scellage 3 en cours de collage.

A l'inverse, l'usage d'une sonotrode surfacique risquerait d'entrainer des discontinuités de qualité d'adhérence au niveau de la jonction entre deux zones de la bande correspondant à deux zones successivement soumises à une surface active de la sonde. En effet, il peut exister un risque de recouvrement partiel des deux zones excitées, la portion de recouvrement des deux zones ayant alors été trop sollicitée par la sonotrode ce qui peut nuire à la qualité d'adhérence ou collage sur l'objet, ou au contraire il peut exister un écart entre les deux zones excitées, cet écart correspondant à une zone non collée sur l'objet (c'est-à-dire non adhérente) ce qui est préjudiciable à l'étanchéité souhaitée.

Dans l'exemple illustré aux figures, l'objet 22 sur lequel est appliqué la bande de scellage, comme détaillé ci-après, est une coque supérieure d'un emballage. L'emballage comprend ainsi ladite coque supérieure et une coque inférieure 21 destinée à être soudée à ladite coque supérieure. Selon un mode de réalisation, la partie d'extrémité inférieure 26 de la coque supérieure 22 est destinée à être engagée dans la coque inférieure 21. L'emballage est de préférence destiné à contenir un produit ou pièce 7 médical(e).

L'objet 22 peut ainsi être conforme à la coque supérieure décrite dans la demande internationale publiée sous le numéro WO2018078242A1.

Selon un aspect particulier, l'emballage est conçu à des fins de préservation du caractère stérile dudit produit ou pièce et en vue du déballage dudit produit ou pièce dans des conditions aseptiques ou proches de l'asepsie. Ledit produit ou pièce peut être par exemple une pièce solide, telle qu'une vis pour chirurgie, ou tout autre type d'objet, en particulier tout autre type d'implant. En outre, ledit produit peut être un liquide ou une poudre. Ledit produit ou pièce et, de préférence, les différentes parties de l'emballage, sont stérilisés par exemple par rayonnement.

Dans l'exemple illustré aux figures, la coque supérieure 22 comprend une partie de fermeture 24, appelée capot, et une partie de liaison 23, se présentant sous la forme d'un corps traversant, et reliée au capot 24 par une charnière 25.

La charnière 25, qui est de préférence formée par une zone de matière, par exemple plastique, continue entre le capot et la partie de liaison permet d'articuler le capot 24 par rapport à la partie de liaison 23 entre une position relevée (ouverte) libérant l'accès à l'intérieur de la partie de liaison et une position abaissée (fermée) empêchant l'accès à l'intérieur de ladite partie de liaison. Préalablement au scellage, la charnière n'a pas été sollicitée de sorte que le capot est en position « fermée » et que la zone de charnière présente une continuité de surface, sans pli, avec les zones voisines du capot et de la partie de liaison. Comme expliqué ci-après, selon un mode de réalisation, la sonotrode et la bande de scellage sont positionnées de manière à initier le collage de la bande de scellage hors de la fente, sur la partie de la coque supérieure qui forme la charnière.

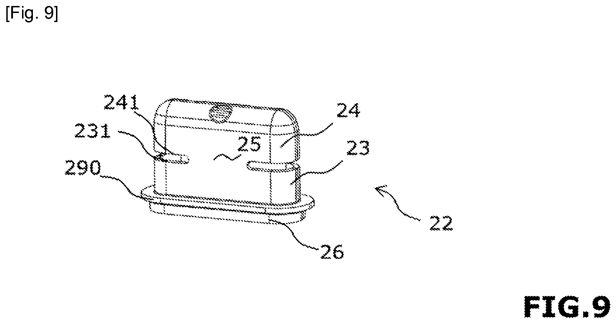

Dans l'exemple illustré à la figure 9, ladite partie de liaison 23 se présente sous la forme d'un tronçon de la coque supérieure. La partie de liaison 23 est de forme générale cylindrique dont la paroi périphérique se développe autour de l'axe d'ouverture de ladite coque supérieure.

Comme évoqué ci-dessus, une fois le procédé de scellage achevé, la bande de scellage 3 relie, du côté extérieur de la coque supérieure, les bords 231, 241 du capot et de la partie de liaison qui se font face à l'état fermé (ou abaissé) du capot, sur toute la longueur des bords et d'un bord à l'autre de manière à sceller l'emballage.

Selon un mode de réalisation, le déplacement du support 1 de l'objet est piloté en combinaison avec l'activation de la sonotrode 5, au moins jusqu'à ce que la bande de scellage 3 revienne sur elle-même en étant collée par la sonotrode 5 sur une partie de la bande de scellage 3 déjà collée sur l'objet 22. Autrement dit, la bande de scellage 3 est appliquée par une de ses extrémités sur la charnière 25 de la coque, et s'étend le long des bords de fente et revient s'appliquer sur la charnière.

Ainsi, dans l'exemple illustré aux figures, la bande de scellage 3 est appliquée par une de ses extrémités sur la charnière 25, s'étend le long des bords respectivement du capot 24 et de la partie de liaison 23, qui s'étendent en regard l'une de l'autre, et revient s'appliquer sur la charnière 25. Chaque bord s'arrête à la charnière.

On obtient ainsi une très bonne étanchéité aux bactéries et au liquide, sans discontinuité le long de la zone d'ouverture de la coque supérieure. A l'inverse, un chevauchement d'une extrémité de la bande par elle-même au niveau d'une partie de la zone d'ouverture de l'emballage, risquerait de provoquer une mauvaise étanchéité.

Avantageusement, la partie de liaison 23 de la coque supérieure est munie d'un élément de rigidification 290 écarté de la charnière. En particulier, la paroi périphérique de la partie de liaison 23 est munie d'une collerette 290, de préférence située à proximité du pourtour inférieur de la coque supérieure qui délimite l'ouverture de la coque supérieure. Ladite partie de liaison 23 de la coque supérieure 22 est destinée à être fixée à la coque inférieure 21, de préférence par soudage.

La collerette 290 est écartée de la zone d'ouverture de la coque supérieure délimitée entre le pourtour supérieur 231 de la partie de liaison et le pourtour 241 correspondant du capot pour permettre à la bande de scellage 3 de recouvrir la zone d'ouverture définie entre lesdits pourtours.

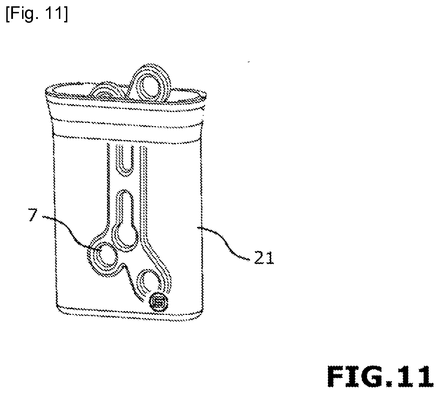

Selon un mode de réalisation illustré à la figure 11, la coque inférieure 21 se présente sous la forme d'un corps creux présentant une extrémité fermée formant fond et une extrémité opposée qui est ouverte. Ainsi chaque coque est considérée comme une coque ouverte au sens où elle forme une cavité borgne et permet à l'état assemblé avec l'autre de définir une chambre fermée à l'état appliqué de la bande de scellage comme détaillé ci-après. La portion d'extrémité ouverte peut être évasée de manière à recevoir une partie de la coque supérieure.

Dans l'exemple illustré aux figures, le pourtour du capot est de même forme et de même dimension que le pourtour supérieur du corps de liaison. Ainsi, en position fermée du capot, lesdits pourtours sont situés en regard l'un de l'autre et forme ensemble ladite coque supérieure en présentant une extrémité fermée et une extrémité opposée ouverte qui, à l'état assemblé de la coque supérieure avec la coque inférieure, communique avec la coque inférieure.

L'unité de pilotage se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de pilotage, notamment pour la commande des moteurs du système de déplacement, peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

L'unité de pilotage est ainsi une unité électronique et/ou informatique. Lorsqu'il est précisé que ladite unité est configurée pour réaliser une opération donnée, cela signifie que l'unité comprend des instructions informatiques et les moyens d'exécution correspondants qui permettent de réaliser ladite opération et/ou que l'unité comprend des composants électroniques correspondants.

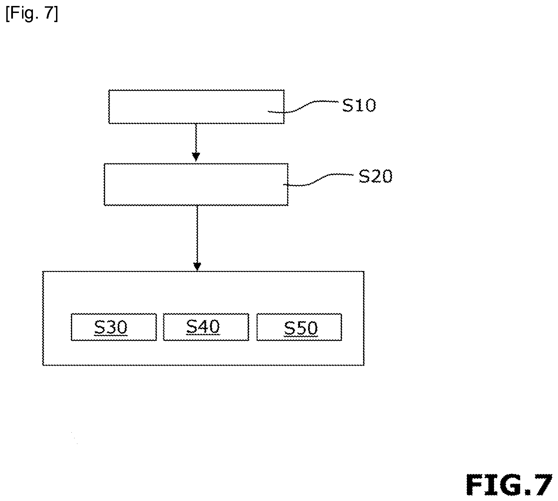

L'unité de pilotage permet ainsi de piloter des étapes de procédé dont un exemple est schématisé sous forme de blocs en figure 7.

Selon ce procédé, à l'étape S10, l'objet 22 est couplé sur le support 1. A cet effet, l'unité de pilotage peut activer le système de maintien, par exemple un système d'aspiration pour maintenir l'objet 22 couplé au support 1.

A l'étape S20, l'unité pilotage 100 commande l'amenée, par exemple par mise en rotation du galet 4 rotatif, et éventuellement d'un dévidoir, de la bande de scellage 3 entre l'objet 22 et la sonotrode 5.

L'unité de pilotage 100 commande alors le positionnement d'une partie de l'objet 22, par exemple la charnière 25, en appui sur le segment de ligne SL51 de la sonotrode 5 par l'intermédiaire de la bande de scellage 3.

L'activation de la sonotrode 5 permet au niveau de son segment linéique SL51 d'initialiser le collage de la bande de scellage sur l'objet. Tout en maintenant en appui l'objet 22 contre la sonotrode 5, par l'intermédiaire de la bande de scellage 3 qui s'étend entre l'objet 22 et la sonotrode 5, à une valeur de consigne donnée, grâce au capteur d'effort C15, l'unité de pilotage 100 commande le déplacement du support et donc de l'objet 22 selon le profil de la zone à sceller, ce qui permet de faire défiler la bande de scellage 3 en continu devant la sonotrode 5 et d'appliquer la bande de scellage 5 en continu sur la zone à sceller qui se présente progressivement devant la sonotrode 5 grâce au déplacement piloté du support 1 (et donc de l'objet 22 maintenu). Le déplacement piloté peut comprendre un mouvement de rotation S30 du support 1 sur lui-même (autour de l'axe Y), un mouvement de translation S40 du support 1 selon l'axe X et/ou un mouvement de translation S50 du support 1 selon l'axe Z. Une fois achevée l'application de la bande de scellage sur la zone à sceller de l'objet, l'unité de pilotage 100 peut commander l'activation d'un système de coupe de la bande (non représenté). L'objet 22 peut alors être retiré du support, par exemple après inactivation du système de maintien.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Procédé de scellage d'une zone (20) d'un objet (22), dite zone à sceller, telle qu'une fente d'ouverture, ladite zone à sceller étant destinée à être recouverte par une bande de scellage (3), la bande de scellage comprenant une matière qui est adhésive à l'état excité par ultrasons, ledit procédé comprend les étapes suivantes :
- amenée, par exemple à l'aide d'un galet (4) rotatif, de la bande de scellage (3) entre l'objet (22) et une sonotrode (5) qui présente une zone d'application (51) linéique qui est un segment de ligne (SL51),
- mise en appui de la zone d'application (51) linéique de la sonotrode (5) avec la bande de scellage (3) pour faire adhérer la zone de la bande de scellage (3) qui est en contact avec la zone d'application (51) linéique de la sonotrode (5), sur une zone correspondante de l'objet (22),
- déplacement de l'objet (22) relativement à la sonotrode (5) en fonction du profil de la zone à sceller de manière à appliquer la bande de scellage (3) sur la zone (20) à sceller de l'objet (22).

2. Procédé selon la revendication 1, dans lequel le déplacement de l'objet (22) comprend un mouvement de rotation (S30) de l'objet (22) autour d'un axe (Y) de rotation.

3. Procédé selon la revendication 2, dans lequel le déplacement de l'objet (22) comprend un déplacement (S40, S50) de l'objet (22) selon une direction (X, Z) transversale à la direction de l'axe de rotation (Y).

4. Procédé selon la revendication 2 ou 3, dans lequel le déplacement de l'objet (22) comprend un déplacement de l'objet (22) selon une direction parallèle à la direction de l'axe de rotation (Y).

5. Procédé selon l'une quelconque des revendications précédentes, dans lequel des ultrasons sont transmis par la sonotrode (5) à la partie (32) de la bande de scellage (3) qui se présente entre l'objet (22) et la sonotrode (5) de sorte que ladite partie (32) de la bande de scellage (3) soumise aux ultrasons est collée sur l'objet (22), et dans lequel le déplacement de l'objet (22) entraine le défilement de la bande de scellage (3) entre la sonotrode (5) et l'objet (22).

6. Procédé selon l'une quelconque des revendications précédentes, dans lequel l'effort d'appui de la sonotrode (5) sur l'objet est mesuré à l'aide d'un capteur (C15), tel qu'une jauge d'effort, et dans lequel l'objet (22) est déplacé en fonction de l'effort d'appui mesuré.

7. Procédé selon l'une quelconque des revendications 2 à 6, dans lequel la direction du segment de ligne (SL51) défini par la zone d'application (51) linéique de la sonotrode est parallèle à la direction (Y) de rotation de l'objet (22).

8. Procédé selon l'une quelconque des revendications précédentes, dans lequel la bande de scellage (3) comprend une face munie de colle (320) qui devient active (321) lorsqu'elle soumise aux ultrasons de la sonotrode (5).

9. Procédé selon l'une quelconque des revendications précédentes, dans lequel l'objet (22) est déplacé au moins jusqu'à ce que la bande de scellage (3) revienne sur elle-même en étant collée par la sonotrode (5) sur une partie de la bande de scellage (3) déjà collée sur l'objet (22).

10. Procédé selon l'une quelconque des revendications précédentes, dans lequel le procédé comprend une étape de coupe de la bande de scellage après recouvrement par la bande de scellage (3) de la zone (20) à sceller de l'objet (22).

11. Machine pour le scellage d'une zone (20), dite zone à sceller, d'un objet (22), ladite zone à sceller, telle qu'une fente d'ouverture, étant destinée à être recouverte par une bande de scellage (3) munie d'une matière qui est adhésive à l'état excité par ultrasons, ladite machine comprenant :
- un système de couplage permettant de tenir l'objet (22) ;
- une sonotrode (5) qui présente une zone d'application (51) linéique, qui est un segment de ligne (SL51), apte à venir en contact avec la bande de scellage (3) pour, à l'état actif de la sonotrode (5), faire adhérer la zone de la bande de scellage (3) qui est en contact avec la zone d'application (51) linéique de la sonotrode (5), sur la zone à sceller (20) de l'objet (22),
- un dispositif d'amenée, par exemple à l'aide d'un galet rotatif (4), permettant d'amener la bande de scellage (3) entre l'objet (22) et une sonotrode (5) ;
- un système de déplacement motorisé permettant de déplacer l'objet (22) relativement à la sonotrode (5),
- une unité de pilotage (100) configurée pour piloter le système de déplacement motorisé de manière à déplacer l'objet (22) en fonction du profil de la zone à sceller pour appliquer la bande de scellage (3) sur la zone à sceller (20).

12. Machine selon la revendication 11, dans laquelle la machine comprend un capteur d'effort (C15) agencé pour mesurer l'effort d'appui entre l'objet (22) et la sonotrode (5), et dans laquelle l'unité de pilotage (100) est configurée pour piloter le déplacement de l'objet (22) en fonction de l'effort d'appui mesuré.

## Patentansprüche

1. Verfahren zum Abdichten eines Bereichs (20) eines Gegenstands (22), der als Abdichtungsbereich bezeichnet wird, beispielsweise eines Öffnungsschlitzes, wobei der Abdichtungsbereich mit einem Dichtstreifen (3) bedeckt werden soll,
wobei der Dichtstreifen ein Material umfasst, das im mit Ultraschall behandelten Zustand haftend ist, wobei das Verfahren folgende Schritte umfasst:
- Zuführen des Dichtstreifens (3), beispielsweise mithilfe einer sich drehenden Rolle (4), zwischen den Gegenstand (22) und eine Sonotrode (5), die einen linienförmigen Behandlungsbereich (51) aufweist, der ein Linienabschnitt (SL51) ist,
- Auflegen des linienförmigen Behandlungsbereichs (51) der Sonotrode (5) auf den Dichtstreifen (3), damit der Bereich des Dichtstreifens (3), der den linienförmigen Behandlungsbereich (51) der Sonotrode (5) berührt, an einem entsprechenden Bereich des Gegenstands (22) haftet,
- Bewegen des Gegenstands (22) in Bezug auf die Sonotrode (5) je nach Profil des Abdichtungsbereichs, damit der Dichtstreifen (3) auf den Abdichtungsbereich (20) des Gegenstands (22) aufgebracht wird.

2. Verfahren nach Anspruch 1, wobei das Bewegen des Gegenstands (22) eine Drehbewegung (S30) des Gegenstands (22) um eine Drehachse (Y) herum umfasst.

3. Verfahren nach Anspruch 2, wobei das Bewegen des Gegenstands (22) ein Bewegen (S40, S50) des Gegenstands (22) in einer Richtung (X, Z) quer zur Richtung der Drehachse (Y) umfasst.

4. Verfahren nach Anspruch 2 oder 3, wobei das Bewegen des Gegenstands (22) ein Bewegen des Gegenstands (22) in einer Richtung parallel zur Richtung der Drehachse (Y) umfasst.

5. Verfahren nach einem der vorhergehenden Ansprüche, wobei der Ultraschall von der Sonotrode (5) derart auf den Abschnitt (32) des Dichtstreifens (3) übertragen wird, der zwischen dem Gegenstand (22) und der Sonotrode (5) liegt, dass der Abschnitt (32) des Dichtstreifens (3), der mit Ultraschall behandelt wird, an den Gegenstand (22) geklebt wird, und wobei durch das Bewegen des Gegenstands (22) der Dichtstreifen (3) zwischen der Sonotrode (5) und dem Gegenstand (22) läuft.

6. Verfahren nach einem der vorhergehenden Ansprüche, wobei die Druckkraft der Sonotrode (5) auf den Gegenstand mithilfe eines Sensors (C15), beispielsweise einer Kraftmessvorrichtung, gemessen wird und wobei der Gegenstand (22) je nach gemessener Druckkraft bewegt wird.

7. Verfahren nach einem der Ansprüche 2 bis 6, wobei die Richtung des Linienabschnitts (SL51), der durch den linienförmigen Behandlungsbereich (51) der Sonotrode definiert ist, parallel zur Drehrichtung (Y) des Gegenstands (22) verläuft.

8. Verfahren nach einem der vorhergehenden Ansprüche, wobei der Dichtstreifen (3) eine mit Klebstoff (320) versehene Fläche umfasst, die aktiv (321) wird, wenn sie mit Ultraschall der Sonotrode (5) behandelt wird.

9. Verfahren nach einem der vorhergehenden Ansprüche, wobei der Gegenstand (22) zumindest so weit bewegt wird, bis der Dichtstreifen (3) dadurch, dass er von der Sonotrode (5) auf einen Abschnitt des Dichtstreifens (3) geklebt wird, der bereits auf den Gegenstand (22) geklebt ist, wieder bei sich selbst ankommt.

10. Verfahren nach einem der vorhergehenden Ansprüche, wobei das Verfahren einen Schritt zum Schneiden des Dichtstreifens nach dem Bedecken des Abdichtungsbereichs (20) des Gegenstands (22) durch den Dichtstreifen (3) umfasst.

11. Maschine zum Abdichten eines Bereichs (20), der als Abdichtungsbereich bezeichnet wird, eines Gegenstands (22), wobei der Abdichtungsbereich, beispielsweise ein Öffnungsschlitz, mit einem Dichtstreifen (3) bedeckt werden soll, der mit einem Material versehen ist, das im mit Ultraschall behandelten Zustand haftend ist,
wobei die Maschine Folgendes umfasst:
- ein Kopplungssystem, mit dem der Gegenstand (22) gehalten werden kann;
- eine Sonotrode (5), die einen linienförmigen Behandlungsbereich (51) aufweist, der ein Linienabschnitt (SL51) ist, der dazu in der Lage ist, den Dichtstreifen (3) zu berühren, damit der Bereich des Dichtstreifens (3), der den linienförmigen Behandlungsbereich (51) der Sonotrode (5) berührt, im aktiven Zustand der Sonotrode (5) auf dem Abdichtungsbereich (20) des Gegenstands (22) haftet,
- eine Vorrichtung zum Zuführen, beispielsweise mithilfe einer sich drehenden Rolle (4), mit der sich der Dichtstreifen (3) zwischen den Gegenstand (22) und eine Sonotrode (5) bringen lässt;
- ein System zum motorbetriebenen Bewegen, mit dem sich der Gegenstand (22) in Bezug auf die Sonotrode (5) bewegen lässt,
- eine Steuereinheit (100), die so ausgelegt ist, dass sie das System zum motorbetriebenen Bewegen so steuert, dass es den Gegenstand (22) je nach dem Profil des Abdichtungsbereichs so bewegt, dass der Dichtstreifen (3) auf den Abdichtungsbereich (20) aufgebracht wird.

12. Maschine nach Anspruch 11, wobei die Maschine einen Kraftsensor (C15) umfasst, der so angeordnet ist, dass er die Druckkraft zwischen dem Gegenstand (22) und der Sonotrode (5) misst und wobei die Steuereinheit (100) so ausgelegt ist, dass sie die Bewegung des Gegenstands (22) je nach gemessener Druckkraft steuert.

## Claims

1. Method for sealing a zone (20) of an object (22), known as the sealing zone, such as an opening slot, said sealing zone being intended to be covered by a sealing strip (3),
the sealing strip comprising a material that is adhesive in the ultrasonically excited state, said method comprising the following steps:
- feeding, for example by means of a rotating roller (4), the sealing strip (3) between the object (22) and a sonotrode (5) which has a linear application zone (51) which is a line segment (SL51),
- pressing the linear application zone (51) of the sonotrode (5) against the sealing strip (3) to cause that zone of the sealing strip (3) that is in contact with the linear application zone (51) of the sonotrode (5) to adhere to a corresponding zone of the object (22),
- moving the object (22) relative to the sonotrode (5) according to the profile of the sealing zone so as to apply the sealing strip (3) to the sealing zone (20) of the object (22).

2. Method according to Claim 1, wherein the moving of the object (22) comprises a rotation (S30) of the object (22) about an axis (Y) of rotation.

3. Method according to Claim 2, wherein the moving of the object (22) comprises a movement (S40, S50) of the object (22) in a direction (X, Z) transverse to the direction of the axis of rotation (Y).

4. Method according to Claim 2 or 3, wherein the moving of the object (22) comprises a movement of the object (22) in a direction parallel to the direction of the axis of rotation (Y).

5. Method according to any one of the preceding claims, wherein ultrasound is transmitted by the sonotrode (5) to that part (32) of the sealing strip (3) that is present between the object (22) and the sonotrode (5) so that said part (32) of the sealing strip (3) that is subjected to the ultrasound is bonded to the object (22), and wherein the movement of the object (22) causes the sealing strip (3) to travel between the sonotrode (5) and the object (22).

6. Method according to any one of the preceding claims, wherein the force with which the sonotrode (5) presses against the object is measured using a sensor (C15), such as a load cell, and wherein the object (22) is moved as a function of the measured pressing force.

7. Method according to any one of Claims 2 to 6, wherein the direction of the line segment (SL51) defined by the sonotrode linear application zone (51) is parallel to the direction (Y) of rotation of the object (22).

8. Method according to any one of the preceding claims, wherein the sealing strip (3) includes a face coated with an adhesive (320) that becomes active (321) when subjected to the ultrasound from the sonotrode (5).

9. Method according to any one of the preceding claims, wherein the object (22) is moved at least until the sealing strip (3) comes back on itself having been bonded by the sonotrode (5) to a part of the sealing strip (3) already bonded to the object (22).

10. Method according to any one of the preceding claims, wherein the method comprises a step of cutting the sealing strip after the sealing strip (3) has covered the sealing zone (20) of the object (22).

11. Machine for sealing a zone (20), called the sealing zone, of an object (22), said sealing zone, such as an opening slot, intended to be covered by a sealing strip (3) provided with a material that is adhesive in the ultrasonically excited state,
said machine comprising:
- a coupling system for holding the object (22);
- a sonotrode (5) which has a linear application zone (51), which is a line segment (SL51), capable of coming into contact with the sealing strip (3) so that, when the sonotrode (5) is in the active state, that zone of the sealing strip (3) that is in contact with the linear application zone (51) of the sonotrode (5) is caused to adhere to the sealing zone (20) of the object (22),
- a feed device, for example using a rotating roller (4), for feeding the sealing strip (3) between the object (22) and a sonotrode (5);
- a motorized movement system for moving the object (22) relative to the sonotrode (5),
- a control unit (100) configured to control the motorized movement system so as to move the object (22) according to the profile of the sealing zone so as to apply the sealing strip (3) to the sealing zone (20).

12. Machine according to Claim 11, wherein the machine comprises a load cell (C15) arranged to measure the pressing force between the object (22) and the sonotrode (5), and wherein the control unit (100) is configured to control the movement of the object (22) as a function of the measured pressing force.
